# EUROPEAN PATENT APPLICATION

(11) **EP 4 664 319 A1**
(43) Date of publication of application: **17.12.2025**
(21) Application number: 25182542.8
(22) Date of filing: 13.06.2025
(51) Int. Cl.: G06F 16/3329, G06F 16/532, G06N 20/00

(54) **METHOD AND SYSTEM FOR DESIGNING STYLE BASED AI APPLICATIONS**

(30) Priority: 15.06.2024 IN 202421046378
(71) Applicant: Tata Consultancy Services Limited, Maharashtra (IN)
(72) Inventor: JAMWAL, Vikram, 411028 Pune, Maharashtra (IN); SRIVASTAVA, Vivek, 110001 New Delhi, Delhi (IN); GAJULA, Pavan Bhargav, 560066 Bangalore, Karnataka (IN); DANGETI, Abhishek, 500034 Hyderabad, Telangana (IN)
(74) Representative: Goddar, Heinz J.

(57) **Abstract**

This disclosure relates generally to a method and system for designing style based ai applications. Available methods have limitations in creating robust co-creative technology solutions or platforms which exploit different aspects of style in content creation. The disclosed method explores and evaluates the existing AI technologies for style related problems like generating and customizing new artworks in the artistic styles of an artwork or an artist. The method utilizes a conceptual model and a process model. The conceptual model includes different aspects of knowledge such as style specification, style transformation, AI technologies, process evaluation, and artifact quality evaluation that facilitate appropriate design choices for a technology solution concerning a particular application. This static knowledge is applied through a dynamic process in the form of the process model.

## Description

### CROSS-REFERENCE TO RELATED APPLICATIONS AND PRIORITY

The present application claims priority from Indian patent application no. 202421046378, filed on June 15, 2024.

### TECHNICAL FIELD

The disclosure herein generally relates to designing artificial intelligence applications, and, more particularly, to a method and system for designing style based artificial intelligence applications.

### BACKGROUND

Style is defined as the organizing principle by which something is achieved or constructed. Style is a universal concept and applicable to all creative and artistic aspects of life such as architecture (e.g., neo-futurism, Gothic, Renaissance), visual art (e.g., impressionism, cubism, hyper-realism), music (e.g., classical, jazz, rock), and fashion (casual, formal chick). In the visual art domain, there has been a rapid advancement in image-generative Artificial Intelligence (AI) in recent years. The ability to learn and apply artistic styles through machine learning models has opened new application avenues and business opportunities in creative content creation. Since it is a rapidly evolving field, with a constant stream of innovations, it becomes quite challenging to design a technology solution or a co-creative platform that can effectively utilize the various aspects of new style-transfer capabilities. To facilitate the design and implementation of the technology solutions, there is a need to survey, analyze, and critically evaluate the technology landscape for 'artistic style' in the context of application design.

Generative models have opened new opportunities in content creation, customization, and curation applications involving the style of an artwork. These opportunities include generating images in a particular style, personalizing a given artwork into different styles, and classifying and clustering given artworks in a museum or exhibition based on style. However, in the absence of foundational design frameworks and with a plethora of research outputs and competing technologies, creating robust co-creative technology solutions or platforms that purposefully exploit different aspects of style in content creation is difficult.

### SUMMARY

Embodiments of the present disclosure present technological improvements as solutions to one or more of the above-mentioned technical problems recognized by the inventors in conventional systems. For example, in one embodiment, a method for designing style based artificial intelligence applications is provided. The method includes determining one or more user interactions and a style specification to solve an artistic problem by using a first Large Language Model (LLM) agent from a problem specification comprising a description of the artistic problem. This is received from a user via a user interface along with an artwork dataset comprising a plurality of artwork images. Furthermore, the method includes determining one or more style categories corresponding to the style specification from the artwork dataset using a second LLM agent. The one or more style categories are determined by performing at least (i) a comparison of the style specification with a metadata of a cluster database, or (ii) a style-based clustering of the plurality of artwork images by controlling a set of cluster parameters dynamically using one or more clustering metric scores and the problem specification. Furthermore, the method includes extracting one or more benchmark records from a benchmark database by formulating one or more queries using a third LLM agent utilizing a Retrieval Augmented Generation (RAG) pipeline based on the problem specification. Further, the method includes determining an optimal model for solving the artistic problem using the RAG pipeline by prompting the third LLM agent with a context comprising the one or more user interactions, the one or more benchmark records, a plurality of benchmark criteria, the style specification and the problem specification. Finally, the method includes fine-tuning the optimal model using the one or more style categories and the plurality of benchmark criteria to generate a fine-tuned model corresponding to the artistic problem.

In another aspect, a system for designing style based artificial intelligence applications is provided. The system includes determining one or more user interactions and a style specification to solve an artistic problem by using a first Large Language Model (LLM) agent from a problem specification comprising a description of the artistic problem. This is received from a user via a user interface along with an artwork dataset comprising a plurality of artwork images. Furthermore, the system includes determining one or more style categories corresponding to the style specification from the artwork dataset using a second LLM agent. The one or more style categories are determined by performing at least (i) a comparison of the style specification with a metadata of a cluster database, or (ii) a style-based clustering of the plurality of artwork images by controlling a set of cluster parameters dynamically using one or more clustering metric scores and the problem specification. Furthermore, the system includes extracting one or more benchmark records from a benchmark database by formulating one or more queries using a third LLM agent utilizing a Retrieval Augmented Generation (RAG) pipeline based on the problem specification. Further, the system includes determining an optimal model for solving the artistic problem using the RAG pipeline by prompting the third LLM agent with a context comprising the one or more user interactions, the one or more benchmark records, a plurality of benchmark criteria, the style specification and the problem specification. Finally, the system includes fine-tuning the optimal model using the one or more style categories and the plurality of benchmark criteria to generate a fine-tuned model corresponding to the artistic problem.

In yet another aspect, there are provided one or more non-transitory machine-readable information storage media comprising one or more instructions which when executed by one or more hardware processors cause for designing style based artificial intelligence applications is provided. The instructions which when executed by the one or more hardware processors cause determining one or more user interactions and a style specification to solve an artistic problem by using a first Large Language Model (LLM) agent from a problem specification comprising a description of the artistic problem. This is received from a user via a user interface along with an artwork dataset comprising a plurality of artwork images. Furthermore, the instructions which when executed by the one or more hardware processors cause determining one or more style categories corresponding to the style specification from the artwork dataset using a second LLM agent. The one or more style categories are determined by performing at least (i) a comparison of the style specification with a metadata of a cluster database, or (ii) a style-based clustering of the plurality of artwork images by controlling a set of cluster parameters dynamically using one or more clustering metric scores and the problem specification. Furthermore, the instructions which when executed by the one or more hardware processors cause extracting one or more benchmark records from a benchmark database by formulating one or more queries using a third LLM agent utilizing a Retrieval Augmented Generation (RAG) pipeline based on the problem specification. Further, the instructions which when executed by the one or more hardware processors cause determining an optimal model for solving the artistic problem using the RAG pipeline by prompting the third LLM agent with a context comprising the one or more user interactions, the one or more benchmark records, a plurality of benchmark criteria, the style specification and the problem specification. Finally, the instructions which when executed by the one or more hardware processors cause fine-tuning the optimal model using the one or more style categories and the plurality of benchmark criteria to generate a fine-tuned model corresponding to the artistic problem.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for designing style-based Artificial Intelligence (AI) applications according to some embodiments of the present disclosure.
FIG.2 illustrates an example of conceptual model with different conceptual model components for designing style-based AI applications according to some embodiments of the present disclosure.
FIG.3 is an exemplary flow diagram illustrating a method for designing style-based AI applications according to some embodiments of the present disclosure.
FIG. 4 is an overall block diagram illustrating steps for designing style-based AI applications according to some embodiments of the present disclosure.
FIG. 5 illustrates examples of different style categories of an artwork dataset according to some embodiments of the present disclosure.
FIG. 6 illustrates (a) an example for a user image, a style image and a stylized image created corresponding to a problem P1, and (b) an example for an input control and a stylized image created corresponding to a problem P2 according to some embodiments of the present disclosure.
FIG. 7 illustrates examples of identified AI models for the problem P1 according to some embodiments of the present disclosure.
FIG. 8 shows a qualitative comparison of different variants of text-to-image generation models for the problem P2 according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Style is often used colloquially as an indicator of the signature of an artist or an artistic school. The style of an artist is of great commercial value. Style is an indicator of the originality and provenance of an art item and greatly affect the valuation of the art item. In the era of consumerism, the capture and transfer of style of art masters to objects of consumption such as products, fashion, marketing and the like.

In the domain of artwork creation and manipulation, artificial intelligence (AI) plays a fundamental role in applications such as style transfer and personalization. Style transfer is an active area of interest in computer vision and allied fields where it is usually studied as a problem of texture synthesis, which is to extract and transfer the texture from the style reference image to the target image. Traditional style transfer methods use handcrafted features to match the patches between the content image and the style reference image. In recent years, several advanced technologies such as deep convolutional neural networks have been used to capture and transfer style patterns. Apart from the widely popular image-to-image style transfer task, recent works on text-to-image generation also facilitate generating images in a desired style controlled through the text prompt. These AI technologies empower modern artists to create high quality artworks. It also encourages many non-artists to participate in the creative process of artwork generation.

It is common now, providing specification of art styles using text prompts and transferring these to generated images using text-image machine learning (ML) models. However, styles rendered through pre-trained base models suffer from biases in data (few art pieces of an artist are popular and oversampled) and therefore incorrectly capture the style of an artist. The style of an artist is subtler and is continuous. The style changes over the lifetime of an artist as an artist is exposed to newer influences. There is a need for a more accurate and expert aided method and tool to recognize, capture and apply style in the course of the development of an application needing stylistic inputs. A style co-pilot should guide a developer/architect through an aided process to identify the best ML models given a stylistic input task and provide decision aids which include AI economics.

The present disclosure simplifies the process of bringing stylistic inputs into application development in the field of visual arts. The present disclosure provides a method for selecting the appropriate AI technologies by evaluating them against certain benchmark criteria and developing applications using them for the style related AI problems like generating and customizing new images in the artistic styles of an artwork or an artist, providing knowledge on the style concepts, capabilities, and challenges in applying these systems and techniques. The disclosed method has two aspects, (i) a conceptual model, which covers the structural or knowledge aspects of a style-driven application, and (ii) a process model, which covers the dynamic or the application aspects of applying the knowledge to achieve the desired outcomes in style-driven application design.

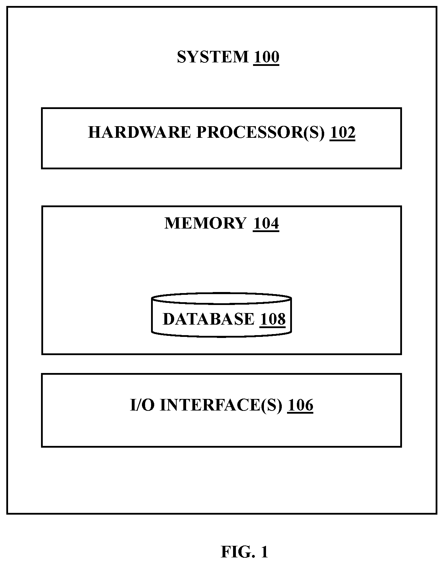

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG. 1 illustrates an exemplary block diagram of a system 100 for designing style-based AI applications according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules. Further, the plurality of modules includes programs or coded instructions that supplement applications or functions performed by the system 100 for executing different steps involved in the process for designing style-based AI applications by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof.

Further, the memory 104 include a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database includes one or more artwork datasets, a cluster database, a benchmark database etc.

The disclosed method has five conceptual model components that capture the different dimensions of knowledge required in the design of style-based AI applications namely (i) style specification, (ii) style transformation, (iii) AI technologies, (iv) artifact quality evaluation, and (v) process evaluation. Each of these conceptual model components are described as below:
Style specification: The fundamental requirement in building a style-based application is to identify how a user would provide the style reference. A user can specify the style through diverse techniques such as providing a single artwork or a collection of artworks. A user can also specify the style through verbal description such as by providing the name of the artist (e.g., "in the style of artist A") or through a more detailed style description such as "in the style of The Scream by artist A", "in the style of watercolor paintings by artist B", etc.
Style transformation: Based on the style reference specification by the user, the next step is to identify the mechanism to apply the style transformation. Given an image as the style reference, the image-to-image style transformation technique allows to transform an image in the style of the style reference image. On the other hand, the text-to-image style transformation technique generates new image based on the style description provided in the text prompt. Whereas the control-condition based style transformation facilitates to use additional control conditions such as line drawing and hand-drawn sketch and further refine them in a certain style with style transfer models.
Generative AI technologies: The choice of generative AI technology influences key decisions in application development. Also, the style reference specification by the user and the type of style transformation influences the choice of AI technology for the application. For instance, if a user wishes to specify the style through verbal description in a text prompt, the diffusion model-based techniques that are widely popular for text-to-image generation is a suitable choice. With the rapid pace of development in the AI landscape, it is observed that several prominent fundamental technologies are available with their own merits and limitations such as the inference speed, cost of computation, etc. Some of the AI technologies frequently used in the style transfer literature include diffusion models, transformers, generative adversarial network (GANs), convolutional neural networks, etc.
Artifact quality evaluation: While training (and post-training) the AI models for the desired style transformation, the quality of the artifact produced by these models needs to be evaluated. The quality of the artifact reflects the AI model's capability on the given style transformation task. For instance, in the case of the image-to-image style transformation task, the artifact quality is evaluated by measuring the style similarity between the style reference image and the stylized image. The quality of the artifact (and the model) is evaluated with both qualitative and quantitative measures. Qualitative evaluation generally involves assessing the quality based on human visual perception. Whereas the quantitative evaluation involves metrics such as style loss, perceptual loss, prompt fidelity, etc.
Process evaluation: Furthermore, the different processes involved in the entire workflow such as data curation, bench-marking existing models, artifact quality evaluation, etc. are to be evaluated. The objective of the present disclosure behind the process evaluation is to identify and troubleshoot the bottleneck in the involved processes. The processes on criteria such as feasibility, cost, and efficiency are evaluated. Through different mechanisms, it is identified if the processes are easy to set up and execute while being cost-efficient and satisfying the project requirements.

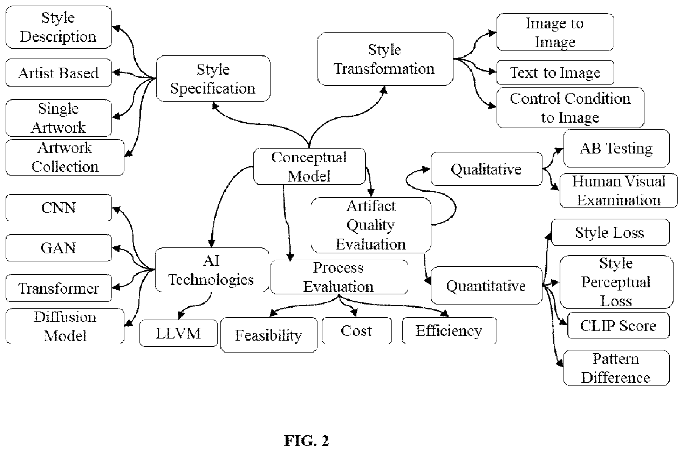

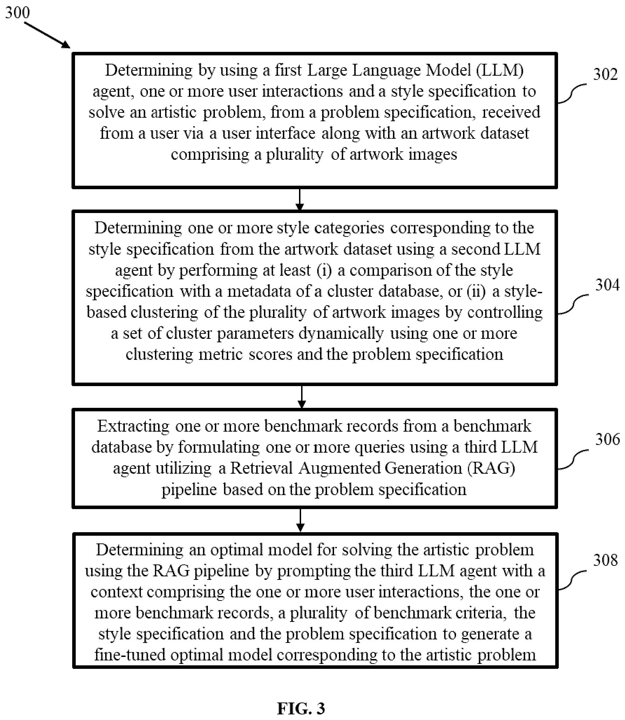

FIG. 2 illustrates an example of conceptual model with different conceptual model components for designing style based artificial intelligence applications according to some embodiments of the present disclosure. It is to be noted that the different conceptual model components and their sub-components is not limited to as shown in FIG.3. The sub-components used in the different conceptual model components depends on the style problem to be solved by the system 100. The detailed functionality corresponding to each conceptual model component is explained in detail hereafter using FIG.3.

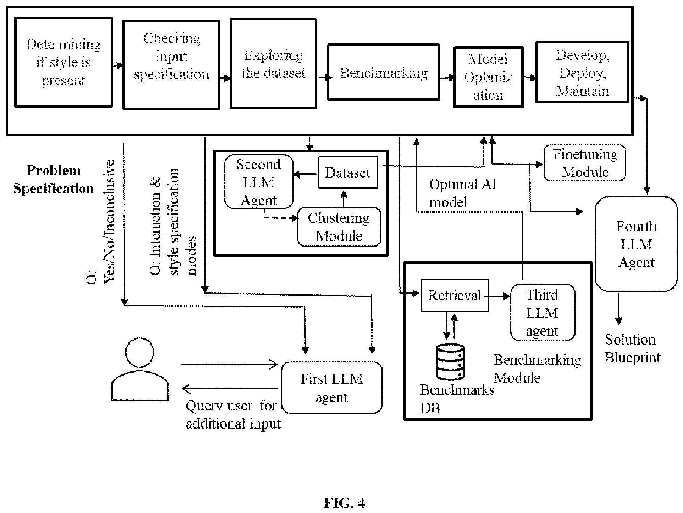

FIG.3 is an exemplary flow diagram illustrating a method for designing style-based AI applications according to some embodiments of the present disclosure. In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 1, and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof. FIG. 4 is an overall block diagram illustrating the steps for designing style-based AI applications according to some embodiments of the present disclosure. The steps 302 through 308 of the method 300 refers to the process model of the present disclosure which utilizes the conceptual model components and is explained using an example with two generic problem specifications corresponding to two artistic problems.
P1: Stylizing a user image in the style of artist A using the style reference image.
P2: Generating new images in the style of artist A with user-defined controls.

P1 is generically stylizing a user image using the reference image to get a stylized image. P2 is broadly for generating new images in the style of a specific artist. The method 300 provides a method which is capable of evaluating a set of AI models in capturing the style of an artist A and utilizing that learned style in creating new creative content.

For the above artistic problems, the artist A's archive of artworks is utilized comprising paintings and sketches. For the artistic problem P2, the text prompt is considered as the principal user-defined conditional control, but the usage can be extended to other conditional controls such as line-drawings, scribbles, depth-maps, and pose-markers. The steps provided hereafter explains solution for the above problem statements.

Now referring to FIG. 3, at step 302 of the method 300, the one or more hardware processors 102 are configured to determine one or more user interactions and a style specification to solve an artistic problem. The one or more user interactions and the style specification is determined from a problem specification (PS) using a first Large Language Model (LLM) agent. The problem specification comprises a description of the artistic problem and is received from a user via a user interface of the system 100 along with an artwork dataset. The artwork dataset comprises a plurality of artwork images. Initially the given problem specification is examined by the system 100 to identify if it involves artistic style requirements such as the one or more user interactions and the style specification. Determining the one or more user interactions specifically the modes of user interactions and the style specification is crucial for the system 100 to analyze the modalities of input to the end-application and how the user and the end-application interact with each other. This helps in picking the relevant AI models from a benchmarking database which is explained later in the present disclosure and in the generation of final blueprint of the end-application. The user is also queried by the system 100 if any additional information is required. The artistic problems such as image generation and artwork personalization with AI techniques are popularly known to include artistic style transformations at different stages. In both the problem specifications (P1 and P2), the artistic style is to be captured and transferred from the existing artworks of artist A. Hence, both the problems involve artistic style. The phrases "artistic problem" and "problem" are interchangeably used in the present disclosure.

The PS is segmented semantically, and each segment is reasoned over by the first LLM agent to identify different information present in the PS like the task/objective, input/outputs to the end-application and the manner of user interaction, other user-imposed constraints, etc. The validation of the parsing results is also performed by the first LLM agent and if any ambiguity is present, the user input is taken, and the parsing is re-run. Automatic parsing of the PS is done by the system 100 and involvement of a human for additional input if required is also considered for achieving better results by the system 100. An example of the query to the first LLM agent is as follows: 'Does the problem involve style?' and the problem specification is provided to the first LLM agent as an additional context. The first LLM agent outputs a 'yes' or a 'no' for the presence of style based on the problem specification. If the information presented in the problem specification is inadequate, the first LLM agent queries the user for additional information and repeats the checking process. If the artistic problem is related to artistic style, the system 100 proceeds to the next step, else it stops here. Using the first LLM agent, the system 100 analyzes the possible ways the user can interact with the end-application and how the user can specify the style for the given problem. This is performed by passing the problem specification as context and prompting the first LLM agent with the following example query: 'What are different modes of user interaction and style specification?'. If the first LLM agent needs more information or any clarification, it prompts the user for additional input and determines the modes of interaction or style specification. This helps the system 100 while picking the suitable model for the problem as it can directly rule out the models that do not offer the identified user interaction/style specification modes. The style specification component in the conceptual model performs the above-mentioned task to understand how the user will interact with the end-application and specify the style. Considering the two problem specifications P1 and P2, in the context of P1, the user specifies the intended style through a single artwork of artist A or a collection of artworks of similar style. Leveraging this style specification from the user, the system 100 attempts to transfer the style to the user-provided image. For P2, the user typically specifies the intended artistic style through the text prompt by either providing the style description (e.g., "watercolor painting"), the name of the artist (e.g., "in the style of artist A"), or both. In addition, the current text-to-image generation models can be fine-tuned on a single artwork or a collection of artworks along with the artwork caption as in the text prompt.

Once the one or more user interactions and the style specification are determined at step 304 of the method 300, the one or more hardware processors 102 are configured to determine one or more style categories corresponding to the style specification from the artwork dataset using a second LLM agent. The one or more style categories are determined by performing at least (i) a comparison of the style specification with a metadata of a cluster database, or (ii) a style-based clustering of the plurality of artwork images. The style-based clustering is performed by controlling a set of cluster parameters dynamically using one or more clustering metric scores and the problem specification. The second LLM agent determines the one or more style categories by exploring the metadata of the cluster database stored in the database 108. The cluster database includes different clusters of different artwork dataset along with the metadata for the different clusters which relates to different style specification. The style specification is identified by comparing the metadata with the style specification. If no style categories are present corresponding to the style specification, the second LLM agent calls a clustering module to obtain a plurality of clusters based on the style specification. The clustering module clusters the plurality of artwork images using a clustering technique such as K-Means clustering, hierarchical clustering, deep embedded clustering and the like, to generate the plurality of clusters. Then each of the plurality of clusters are annotated based on an associated style to generate a plurality of annotated clusters. The annotation of associated style on the plurality of clusters is carried out by annotating representative samples of the plurality of clusters. Annotating determines the appropriate sub-cluster(s) relevant to the problem by comparing the cluster annotation (caption/description) with the style specification provided in the PS. For example, if the style specification in the PS is 'oil painting style'. Then the appropriate sub-cluster can be found out by matching the cluster annotations (water painting images, pencil sketch images, cubism art, pop art, etc.) with the style specification. If no such label is present in PS, but instead a style reference image is provided, the second LLM agent compare one or more embeddings of a plurality centroids associated with the plurality of clusters with the embedding of the given reference image to identify the relevant sub-cluster(s). The clustering module utilizes a style encoder network to encode the image styles as the one or more embeddings.

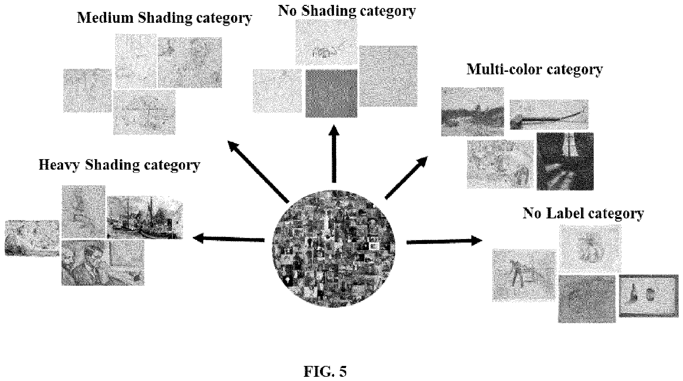

An artist's style evolves over time and as a result, there are multiple styles representations in the artwork dataset. The metadata such as genre, motifs, caption, color, shading information and the like help put the artworks in different style clusters. In the given example for P1 and P2 the dataset of artist A's artwork dataset is used. The artwork dataset is categorized into 5 style categories based on the shading and the color information: heavy shading category, medium shading category, no shading category, multi-color category, and no label category. FIG. 5 illustrates examples of different style categories such as heavy shading category, medium shading category, no shading category, multi-color category, and no label category of an artwork dataset according to some embodiments of the present disclosure.

The second LLM agent also controls the clustering parameters like number of clusters, etc., dynamically based on clustering metric scores and the problem specification. The second LLM agent performs the cluster labelling/annotation by analyzing the styles of the artwork images and captioning the styles in the samples. The second LLM agent also picks the relevant sub-clusters to use by matching the style labels with the input style label/specification or matching the embeddings of input style specification with representative style samples. If data balancing is required for the problem, the second LLM agent augments the sub-categories accordingly by using standard image augmenting techniques.

After determining the one or more style categories at step 306 of the method 300, the one or more hardware processors 102 are configured to extract one or more benchmark records from a benchmark database by formulating one or more queries using a third LLM agent. The benchmark database contains details of different AI models available and the associated benchmark criteria for each AI model across various dimensions. The third LLM agent utilizes a Retrieval Augmented Generation (RAG) pipeline based on the problem specification. RAG is a technique which enhances the LLM by allowing to access and utilize information from an external knowledge base. RAG comprises a retrieval stage, an augmentation stage, and a generation stage. The retrieval stage of the RAG is used for identifying relevant information from the external knowledge base. During the augmentation stage the identified relevant information is augmented with the user query for feeding to the LLM. And during the generation stage of the RAG, an accurate information is generated using the LLM. The different stages of the RAG for generating the optimal model are explained later. The third LLM agent formulate queries dynamically according to the problem specification and extract the one or more benchmark records based on the queries that reflect the constraints and requirements. For instance, considering a problem similar to P2 where a style reference image is provided along with a text prompt, the AI model which is to be selected by the system 100 must take additional style input and generate content in the style of the input image. Based on this constraint, the third LLM agent can formulate a query as, 'Can a style image be given as an additional style reference input to the model?' and using this it can retrieve all the AI models that have the provision to take the style image input.

Once the one or more benchmark records are extracted at step 308 of the method 300, the one or more hardware processors 102 are configured to determine an optimal AI model for solving the artistic problem using the RAG pipeline by prompting the third LLM agent to generate a fine-tuned optimal model. The third LLM agent is prompted with a context comprising the one or more user interactions, the one or more benchmark records, a plurality of benchmark criteria, the style specification and the problem specification. Here it is to be noted that the one or more benchmark records are the details pertaining to different AI models while the plurality of benchmark criteria contain different constraints of the AI models which is related to performance, resources required, code/model availability, etc. Queries are framed based on the problem specification using the third LLM agent and are used for retrieving the relevant one or more benchmark records from the benchmark database. This is the retrieval in RAG. The one or more benchmark records that are retrieved are passed to the third LLM agent along with the plurality of benchmark criteria, PS, etc., in the LLM context. This is the augmentation step of RAG. The third LLM agent analyzes the inputs and determines the optimal model (associated with one of the extracted benchmark records) for the problem. This is referred as generation in RAG. For example, using the RAG based pipeline the system 100 passes the following query with the problem specification, the plurality of benchmark criteria, etc., as context to the third LLM agent: 'Select the most suitable model for the problem based on the benchmark criteria?'. Utilizing the provided context, the RAG pipeline retrieves the AI models that are relevant to the problem from the database 108 and the third LLM agent outputs the most optimal AI model for the problem upon examining all the retrievals.

The third LLM agent assigns weightages to the benchmark criteria dynamically depending on the given PS and different constraints involved to pick the suitable model for the problem. The weightages can be a number within a range (1-10). The following is one way of determining the optimal AI model based on different constraints by assigning weightages. The third LLM agent examines the PS, the constraints, etc., and assigns a value to each constraint between 1 and 10, with 10 being the highest. Next, for each constraint, it ranks the individual benchmark records/AI models by assigning weights (1-10) again. The weighted sum for each AI model is calculated by multiplying the model weightage with the constraint weightage and adding the values across all constraints. The AI model with the highest score is selected as the optimal AI model. Taking the previous example, if the PS specifies that the end application is deployed on user-devices but will not involve any cloud system, the edge-device compatibility metric would be given more weightage than the model performance metrics. i.e., for example, the edge-device compatibility metric can be given a weightage of 9, while the performance metric can be 6. For a different example where there is no restriction present on the compute budget and the output quality is of utmost importance, the weightages can be 2 and 10 respectively.

Using this step the system 100 retrieves the appropriate benchmark records/models from the benchmark database for the problem based on the problem specification and selects the optimal AI model among the retrieved models/records based on the benchmark criteria. For problem P1, models based on transformer, Generative Adversarial Network (GAN), and Convolutional Neural Network (CNNs) architectures that transfer styles between images are retrieved. Transformers are used in modelling relationships among different visual entities, GANs learn the input data distributions and CNNs, on the other hand, capture visual features across different levels of granularity. The architectures of these models enable the capturing of styles in the input data better. Similarly, for the problem P2, text-to-image generation models based on diffusion and transformer architectures are retrieved. Diffusion models and transformers are highly capable of modelling complex input data distributions in both unconditional and conditional settings. The different models that are identified for both the problem specifications P1 and P2 are given below:

Benchmarking stage for problem specification P1: The models that the system 100 picked are Adaptive Instance Normalization (AdaIN), Manifold Alignment Style Transfer (MAST), StyleFormer, Internal-External Learning based Style Transfer (IEST), Adaptive Attention Normalization (AdaAttn), Contrastive Arbitrary Style Transfer (CAST), Style Transformer Square (Sty Tr2), and Aesthetic Pattern-Aware Style Transfer Networks (AesPANet). Next, the system 100 analyzes the different benchmark criteria for the retrieved models. Since no explicit constraint is mentioned in the problem specification, the system 100 assigns highest weightage to the performance metrics and a medium weightage to the inference time and cost metrics. StyleFormer takes the least inference time and cost whereas IEST is the most expensive model for inference. The model's quantitative performance is also evaluated with style loss and content loss. Style loss quantifies the differences in the style between the reference image and a stylized image while content loss quantifies the differences in the content between the user image and the stylized image. A lower score is preferred for both the metrics. It is observed that Sty Tr2 outperforms all the other models on both the metrics while giving a strong competition to AesPA-Net on other benchmarking criteria. The quantitative metrics further showed that the image stylization capability of Sty Tr2 is superior to the other models including AesPA-Net. The system 100 determines Sty Tr2 as the optimal model.

Benchmarking stage for problem specification P2: Imagen, Vector Quantized Generative Adversarial Network - Contrastive Image-Language Pretraining (VQGAN-CLIP), Stable Diffusion 1.5, 2.1 and XL, Muse, Rich Text-to-Image, and DALL-E 3 are the different models picked by the system 100 that align with the given problem specification. As no constraint is specified in the problem specification, the performance metrics along with the inference time and cost metrics are given highest weightage since text-to-image (T2I) models are resource intensive. Among all the variants of stable diffusion (SD) models, SD 1.5 is the most efficient model in terms of inference time and cost. Both VQGAN-CLIP and Rich Text-to-Image are costlier than the three versions of stable diffusion model. To further evaluate the model performance, two evaluation metrics are leveraged: prompt fidelity and image similarity. Prompt fidelity gives the similarity between the prompt and the generated image while image similarity gives the similarity between the generated image and the ground truth artwork. CLIP embedding and CLIP Score are used to get the similarity scores. It is observed that stable diffusion XL (SDXL) outperformed all the other open-source models on both the metrics. However, both SD1.5 and SD2.1 achieved competitive performance compared to that of SDXL with fewer parameters and less inference time and cost. For the next stage, SD1.5 model was chosen to develop custom models for P2 due to its relatively inexpensive inference and competitive performance to that of SD2.1 and SDXL

After determining the optimal AI model the optimal AI model is fine-tuned using the one or more style categories and the one or more benchmark criteria to generate the fine-tuned optimal model corresponding to the artistic problem. The optimal model is fine-tuned using a fine-tuning module (i) using a fine-tuning strategy determined based on a performance of the optimal model and a set of constraints associated with the optimal AI model, and (ii) using a set of hyperparameters determined based on a subset of the one or more benchmark criteria of the optimal AI model. The one or more benchmark criteria are used for determining the correct hyperparameters for fine-tuning the optimal AI model by the fine-tuning module. The system 100 determines the type of fine-tuning technique to be used based on the optimal AI model performance and the constraints like required performance, latency, costs, available resources etc. Different fine-tuning techniques mainly include full model fine-tuning or fine-tuning a few parameters (like in Low Rank Adaptation (LoRA) method). The system 100 also determines the required hyperparameters like the model optimizer, learning rate, etc., that are crucial in fine-tuning any model based on the current performance metrics and the hardware resources available. It also monitors the performance improvement and can interject in between for changing the parameter values for optimal fine-tuning. The system 100 takes the optimal AI model and the artwork dataset as input and fine-tunes the optimal AI model on the artwork dataset.

For the problem specifications P1 and P2, the style categorized dataset from the artist A's image archive is leveraged for developing custom models. Here, style-specific models are created by fine-tuning the pre-trained Sty Tr2 (for P1) and SD1.5 (for P2) models for each style category in the dataset.

Image-to-image style transfer for P1: To develop the custom style-transfer models for P1, the Sty Tr2 model was fine-tuned on artworks from different style categories in the dataset. For style reference, 50 artworks are sampled from each style category, and for input content images 11400 content images are sampled from Microsoft Common Objects in Context (MS COCO) training set. This style-content paired data are used as the training set. Sty Tr2 pre-trained model weights are fine-tuned separately on each of the style categories for 55000 iterations. The time taken for fine-tuning each model is about 10 hours on an A100 Graphical Processing Unit (GPU). To evaluate the performance, the models were tested on the style-content pairs from the remaining artworks in each category and the 50 content images used earlier for benchmarking. It is observed that that the fine-tuned models effectively transfers the fine-grained style attributes such as line, color and texture from the style reference image while simultaneously reducing noise artifacts in the output.

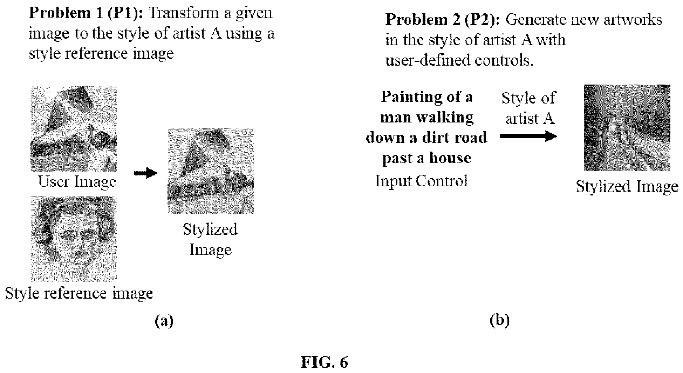

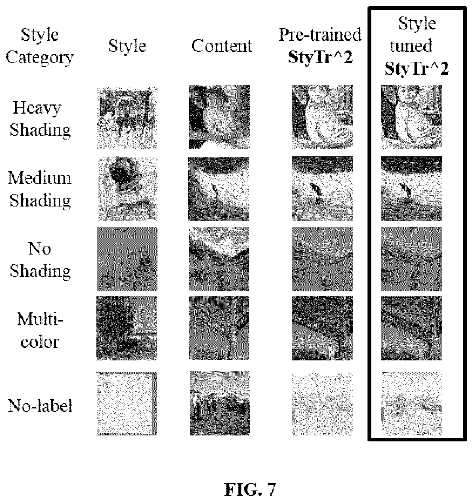

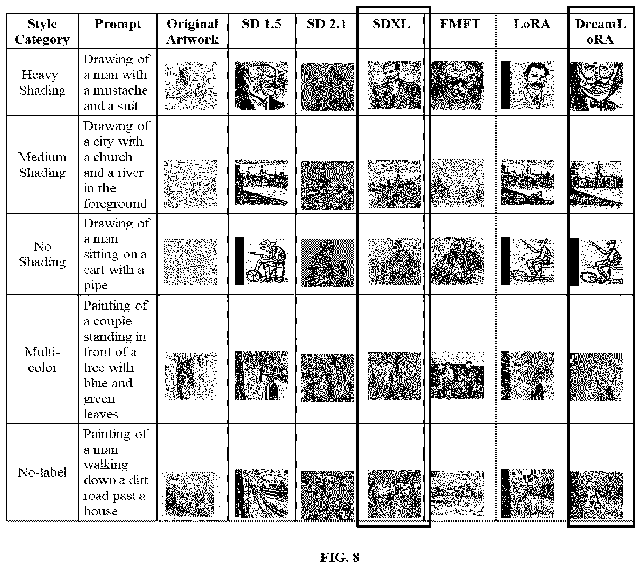

Text-to-image generation for P2: To develop the custom text-to-image generation models for P2, SD1.5 was fine-tuned on artworks from different style categories in the dataset. 50 artworks are chosen from each category and manually refine the captions generated by BLIP for these artworks. SD1.5 is fine-tuned based on the following three techniques: (i) Full Model Fine-Tuning (FMFT), (ii) LoRA based Fine- Tuning, and (iii) Dreambooth LoRA Fine- Tuning. It is observed that the fine-tuning of the model helps to better capture the various elements of the artistic style without explicitly mentioning the style information in the prompt. FIG. 6 illustrates (a) an example for the user image, the style image and the stylized image created corresponding to the problem specificationP1, and (b) an example for an input control and the stylized image created corresponding to the problem specification P2 according to some embodiments of the present disclosure. FIG. 7 illustrates examples of identified AI models for the problem P1 according to some embodiments of the present disclosure. FIG. 7 shows a qualitative comparison of original and finetuned models for the problem specification P1 with the determined optimal AI model. FIG. 8 shows a qualitative comparison of different variants of text-to-image generation models with respect to their performance on textual prompts with the determined optimal AI models and different finetuning strategies. These models are compared based on their capability to reproduce some of the original artworks from artist A through text instructions. Even though these models fail to perfectly reproduce the original artworks, it is observed that all the three variants of stable diffusion model can generate the content provided in the text instruction while bringing in different elements of style from the artist A.

Once the fine-tuning is done, the system 100 generates a blueprint for the problem consisting of the code and the fine-tuned optimal model by calling a fourth LLM agent. The fourth LLM agent takes the code and fine-tuned optimal model as input and generates an end-to-end blueprint for the solution. Next, it proceeds to the deployment stage which is optional. To have a reliable and efficient experience to the end-users the fine-tuned optimal model is integrated into a software application and the application is further deployed to serve the end-users. During deployment, the application is installed on the target systems (e.g., on a cloud), and the environments are configured according to the application requirements.

Generation and customization of images in particular styles are two examples of style-related problems. There are many such problems where the present disclosure can be applied. For instance, co-drawing is one such application in which the user and the application work together by drawing a few strokes iteratively starting from a blank canvas to create artworks. The application can draw strokes in a certain style mimicking the styles of famous artists, or given style references etc. For developing a solution for this co-drawing problem, the first thing the system 100 verifies is the given PS to find the presence of style in the problem using the first LLM agent. The PS can include the description of the desired application with the information about the interactivity between user and system, the art style that the application must follow, inputs and outputs during each step of interaction, the mechanism to convey feedback, the ways feedback is processed, so on and so forth. Along with the PS, the user provides the artwork dataset as a style reference to the application. All these details are provided to the system 100 to understand the problem better and design an end-to-end functional application. The next step that the system 100 does is to take a deeper look at the PS to understand the input modes and the way user interacts with the end application. In the current problem, the user draws a few strokes which go as input to the application and the application should be able to draw the next strokes based on the current canvas. This interaction repeats for a few iterations until the user stops. So, the system 100 enables this interactive functionality while making the final blueprint of the application. If anything is unclear in the PS, the system 100 is enabled to interact with the user to get additional input. After determining the user interactions/style specification, the dataset is explored for the styles. If styles are not present, the system 100 clusters the data to obtain style categories. Next, based on the user interactions and the problem specification, the system 100 retrieves the relevant models from the benchmark database. For this problem, the next stroke-based sketch generation models are retrieved. The one that suits the PS, benchmark criteria, etc., better is finalized with the help of the third LLM agent using a RAG based pipeline. In the fine-tuning stage, the model is finetuned to follow the styles in the dataset while generating the strokes. After that, the system 100 designs the blueprint consisting of the application code involving subroutines for calling the model whenever necessary to meet the desired requirements as specified in PS. In the present disclosure, an example of LLM used is Llama 3. However, it is to be noted that it is not limited to Llama3, any LLM model which can perform the same functionality as described in the present disclosure for designing style-based AI applications can be used.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is noted that embodiments described herein are discussed in the context of a Large Language Model (LLM) / Artificial Intelligence (AI) model / and/ or with a mentioned training data set. It is to be understood by a person having ordinary skill in the art or person skilled in the art that the referred AI/ LLM model(s) are exemplary and shall not be construed as limiting the scope of the present disclosure and they may be trained by any training dataset that meets the mentioned defining characteristics / or has characteristics that define the exemplary training dataset mentioned.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) comprising:
determining, via one or more hardware processors, by using a first Large Language Model (LLM) agent, one or more user interactions and a style specification to solve an artistic problem, from a problem specification (PS) received from a user via a user interface along with an artwork dataset comprising a plurality of artwork images (302);
determining, via the one or more hardware processors, one or more style categories corresponding to the style specification from the artwork dataset using a second LLM agent by performing at least (i) a comparison of the style specification with a metadata of a cluster database, or (ii) a style-based clustering of the plurality of artwork images by controlling a set of cluster parameters dynamically using one or more clustering metric scores and the problem specification (304);
extracting, via the one or more hardware processors, one or more benchmark records from a benchmark database by formulating one or more queries using a third LLM agent utilizing a Retrieval Augmented Generation (RAG) pipeline based on the problem specification (306); and
determining, via the one or more hardware processors, an optimal model for solving the artistic problem using the RAG pipeline by prompting the third LLM agent with a context comprising the one or more user interactions, the one or more benchmark records, a plurality of benchmark criteria, the style specification and the problem specification to generate a fine-tuned optimal model corresponding to the artistic problem (308).

2. The processor implemented method as claimed in claim 1, wherein determining the one or more style categories based on clustering of the plurality of artwork images by the second LLM agent comprises:
clustering, via the one or more hardware processors, the plurality of artwork images using a clustering technique to generate a plurality of clusters;
annotating, via the one or more hardware processors, each of the plurality of clusters based on an associated style to generate a plurality of annotated clusters; and
determining, via the one or more hardware processors, the one or more style categories based on (i) a comparison of the plurality of annotated clusters with the style specification, or (ii) a comparison of one or more embeddings of a plurality of centroids associated with the plurality of clusters with an embedding of a reference image in the problem specification.

3. The processor implemented method as claimed in claim 1, wherein the third LLM agent assigns a pre-defined weight to each of the plurality of benchmark criteria based on the problem specification, the one or more user interactions and the style specification during determination of the optimal model.

4. The processor implemented method as claimed in claim 1, wherein the optimal model is fine-tuned using (i) a fine-tuning technique determined based on a performance of the optimal model and a set of constraints associated with the optimal model, and (ii) a set of hyperparameters determined based on a subset of the plurality of benchmark criteria of the optimal model.

5. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
determine by using a first Large Language Model (LLM) agent, one or more user interactions and a style specification to solve an artistic problem, from a problem specification (PS), received from a user via a user interface along with an artwork dataset comprising a plurality of artwork images;
determine one or more style categories corresponding to the style specification from the artwork dataset using a second LLM agent by performing at least (i) a comparison of the style specification with a metadata of a cluster database, or (ii) a style-based clustering of the plurality of artwork images by controlling a set of cluster parameters dynamically using one or more clustering metric scores and the problem specification;
extract one or more benchmark records from a benchmark database by formulating one or more queries using a third LLM agent utilizing a Retrieval Augmented Generation (RAG) pipeline based on the problem specification; and
determine an optimal model for solving the artistic problem using the RAG pipeline by prompting the third LLM agent with a context comprising the one or more user interactions, the one or more benchmark records, a plurality of benchmark criteria, the style specification and the problem specification to generate a fine-tuned optimal model corresponding to the artistic problem.

6. The system as claimed in claim 5, wherein determining the one or more style categories based on clustering of the plurality of artwork images by the second LLM agent comprises:,
clustering the plurality of artwork images using a clustering technique to generate a plurality of clusters;
annotating each of the plurality of clusters based on an associated style to generate a plurality of annotated clusters; and
determining the one or more style categories based on (i) a comparison of the plurality of annotated clusters with the style specification, or (ii) a comparison of one or more embeddings of a plurality of centroids associated with the plurality of clusters with an embedding of a reference image in the problem specification.

7. The system as claimed in claim 5, wherein the third LLM agent assigns a pre-defined weight to each of the plurality of benchmark criteria based on the problem specification, the one or more user interactions and the style specification during determination of the optimal model.

8. The system as claimed in claim 5, wherein the optimal model is fine-tuned using (i) a fine-tuning technique determined based on a performance of the optimal model and a set of constraints associated with the optimal model, and (ii) a set of hyperparameters determined based on a subset of the plurality of benchmark criteria of the optimal model.

9. One or more non-transitory machine-readable information storage mediums comprising one or more instructions which when executed by one or more hardware processors cause:
determining by using a first Large Language Model (LLM) agent, one or more user interactions and a style specification to solve an artistic problem, from a problem specification (PS) received from a user via a user interface along with an artwork dataset further comprising a plurality of artwork images;
determining one or more style categories corresponding to the style specification from the artwork dataset using a second LLM agent by performing at least (i) a comparison of the style specification with a metadata of a cluster database, or (ii) a style-based clustering of the plurality of artwork images by controlling a set of cluster parameters dynamically using one or more clustering metric scores and the problem specification;
extracting one or more benchmark records from a benchmark database by formulating one or more queries using a third LLM agent utilizing a Retrieval Augmented Generation (RAG) pipeline based on the problem specification; and
determining an optimal model for solving the artistic problem using the RAG pipeline by prompting the third LLM agent with a context further comprising the one or more user interactions, the one or more benchmark records, a plurality of benchmark criteria, the style specification and the problem specification to generate a fine-tuned optimal model corresponding to the artistic problem.

10. The one or more non-transitory machine-readable information storage mediums as claimed in claim 9, wherein determining the one or more style categories based on clustering of the plurality of artwork images by the second LLM agent comprises:
clustering the plurality of artwork images using a clustering technique to generate a plurality of clusters;
annotating each of the plurality of clusters based on an associated style to generate a plurality of annotated clusters; and
determining the one or more style categories based on (i) a comparison of the plurality of annotated clusters with the style specification, or (ii) a comparison of one or more embeddings of a plurality of centroids associated with the plurality of clusters with an embedding of a reference image in the problem specification.

11. The one or more non-transitory machine-readable information storage mediums as claimed in claim 9, wherein the third LLM agent assigns a pre-defined weight to each of the plurality of benchmark criteria based on the problem specification, the one or more user interactions and the style specification during determination of the optimal model.

12. The one or more non-transitory machine-readable information storage mediums as claimed in claim 9, wherein the optimal model is fine-tuned using (i) a fine-tuning technique determined based on a performance of the optimal model and a set of constraints associated with the optimal model, and (ii) a set of hyperparameters determined based on a subset of the plurality of benchmark criteria of the optimal model.
